# EUROPÄISCHE PATENTSCHRIFT

(11) **EP 2 237 912 B1**
(45) Veröffentlichungstag und Bekanntmachung des Hinweises auf die Patenterteilung: **09.05.2012**
(21) Anmeldenummer: 09706094.1
(22) Anmeldetag: 29.01.2009
(51) Int. Cl.: B23K 11/30, B23B 5/16

(54) **SCHNEIDE FÜR DIE BEARBEITUNG VON PUNKTSCHWEISSELEKTRODEN, FRÄSWERKZEUG UND KAPPENFRÄSER**
KNIFE FOR THE MACHINING OF SPOT WELDING ELECTRODES, CUTTING TOOL AND CAP CUTTER
LAME POUR L'USINAGE D'ÉLECTRODES DE SOUDAGE PAR POINTS, OUTIL DE FRAISAGE ET FRAISE À CAPOT

(30) Priorität: 30.01.2008 DE 102008006703
(43) Veröffentlichungstag der Anmeldung: 13.10.2010
(73) Patentinhaber: Lutz Precision, K.S., 821 09 Bratislava (SK)
(72) Erfinder: LUTZ, Peter, 81245 München (DE)
(74) Vertreter: Grünecker, Kinkeldey, Stockmair & Schwanhäusser
(86) Internationale Anmeldenummer: PCT/EP2009/000575
(87) Internationale Veröffentlichungsnummer: WO 2009/095237

(56) Entgegenhaltungen:
- EP-A- 0 844 040
- WO-A-2006/043867
- FR-A- 2 846 897
- JP-A- 4 371 374

## Beschreibung

Die Erfindung betrifft eine Schneide zum Bearbeiten von Punktschweiβelektroden gemäβ dem Oberbegriff des Anspruchs 1 und ein Elektrodenfräswerkzeug für besagte Schneide gemäβ dem Oberbegriff des Anspruchs 11 sowie einen Kappenfräser gemäβ dem Oberbegriff des Anspruchs 14.

Eine solche Schneide bzw. ein solches Werkzeug bzw. ein solcher Fräser ist z.B. aus FR 2846897 bekannt.

Um Blechteile fest miteinander zu verbinden, werden in Industrieanlagen wie beilspielsweise Automobilherstellungsanlagen häufig Schweißroboter mit Schweiβzaugen eingesetzt. Bei einem Schweißvorgang drückt die Schweißzange von zwei gegenüberliegenden Seiten jeweils zwei oder mehrere Blechteile aufeinander, wobei durch in den Zangenarmen der Schweißzange angebrachten Punktschweißelektroden ein elektrischer Strom fließt, so dass die Blechteile punktgenau miteinander verschweißt werden. Nach ungefähr einhundert bis dreihundert Schweißvorgängen sind die Punktschweißelektroden derart abgenutzt bzw. mit Schweißresten belegt, dass ein zuverlässiges Verschweißen nicht mehr gewährleistet werden kann.

Die Schweißelektroden weisen in der Regel austauschbare Kappen auf. Sie können jedoch auch einteilig ohne solche Kappen sein. Die folgenden Ausführungen betreffen beide Fälle gleichermaßen, da das erfindungsgemäße Fräswerkzeug genauso für einteilige Elektroden sowie für Elektroden mit Kappen eingesetzt werden kann.

Um die abgenützten Punktschweißelektrodenspitzen wieder in ihre ursprüngliche Form zu bringen, werden besagte Spitzen mit Hilfe eines Elektrodenfräsers nachbearbeitet. Für die Instandsetzung der abgenützten Punktschweißelektroden, die aus relativ weichem Kupfer bestehen, werden bis zu 0,3 mm Material, typischerweise in Form von Spänen, von den Punktschweißelektrodenspitzen abgetragen.

Um ein störungsfreies Fräsen gewährleisten zu können, ist es wichtig, das beim Fräsvorgang abgetragene Material möglichst schnell und rückstandsfrei aus dem Bereich der Schneide zu entfernen, da sonst die Gefahr eines Zusetzens des Fräswerkzeuges besteht. Das Reinigen eines Elektrodenfräswerkzeuges hat üblicherweise zur Folge, dass der gesamte Schweißprozess für längere Zeit unterbrochen werden muss, was zu enormen Folgekosten durch Produktionsausfall oder durch produzierten Ausschuss führt.

Aus der europäischen Patentschrift EP 0 844 040 ist ein Elektrodenfräswerkzeug mit einer konkaven Vertiefung neben der Fräsklinge bekannt. Diese konkave Vertiefung dient zur Aufnahme und zum Kanalisieren der von der Fräsklinge erzeugten Späne. Dadurch soll das Zusetzen des Fräswerkzeuges vermieden werden.

Daher liegt der nachfolgend beschriebenen Erfindung die Aufgabe zugrunde, das Zusetzen eines Elektrodenfräswerkzeuges mit abgefrästem Material, das beim Nachbearbeiten von abgenutzten Punktschweißelektroden entsteht, zuverlässiger als im Stand der Technik zu verhindern.

Diese Aufgabe wird gelöst mit einer Schneide nach Anspruch 1, einem Elektrodenfräswerkzeug mit der genannten Schneide nach Anspruch 11 sowie mit einem Kappenfräser nach Anspruch 14.

Weitere Ausführungsformen der Erfindung sind in den abhängigen Ansprüchen offenbart.

Die Schneide zum Bearbeiten von Punktschweißelektroden umfasst mindestens eine Fräskante und mindestens eine Ableitvorrichtung zum Ableiten von Material, das von den Punktschweißelektroden abgefräst bzw. abgetragen wird. Eine Ableitvorrichtung dient dazu, das abgefräste Punktschweißelektrodenmaterial, welches hauptsächlich aus Spänen bzw. kleinen Partikeln besteht, aus dem Bereich des Fräswerkzeuges herauszuleiten. Das Herausleiten des abgetragenen Materials wird dadurch erleichtert, dass jeweils eine Fräskante und eine dazugehörige Ableitvorrichtung einteilig ausgebildet sind.

Eine zusammenhängende Einheit besteht also aus einer Fräskante und einer dazugehörigen Ableitvorrichtung.

Mit Hilfe einer solchen kompakten Einheit (bestehend aus Fräskante und Ableitvorrichtung) werden Spalten vermieden, wo in anderen Fällen die Fräskante und die Ableitvorrichtung aneinandergrenzen. Dadurch wird verhindert, dass sich abgefrästes Punktschweißelektrodenmaterial in besagten Spalten ablagert bzw. verhakt, was die Gefahr eines Zusetzens des Elektrodenfräswerkzeuges erhöhen würde. Außerdem weist eine einzelne Einheit, die beispielsweise aus einem einzigen Stück hergestellt worden ist, eine höhere Stabilität auf, was eine höhere Präzision beim Fräsen erlaubt.

Vorzugsweise ist die gesamte Schneide einteilig ausgebildet, so dass alle Fräskanten und alle Ableitvorrichtungen eine einzige Einheit bilden. Typischerweise umfasst eine Schneide zwei Fräskanten mit jeweils dazugehörigen Ableitvorrichtungen, wobei die Fräskanten in entgegengesetzte Richtungen weisen, so dass mit einer Schneide zwei Punktschweißelektroden (einer Schweißzange) gleichzeitig bearbeitet werden können. Die Schneide kann aber auch aus mehreren Teilen zusammengesetzt sein, solange eine oder zwei Fräskanten mit der jeweiligen Ableitvorrichtung einteilig ausgebildet ist.

Die gesamte Schneide besteht bevorzugter Weise aus einem Material, das eine einheitliche chemische Zusammensetzung aufweist. Es bestehen jedoch die Möglichkeiten, dass entweder das verwendete Material in der gesamten Schneide homogene Materialeigenschaften besitzt, oder dass das Material unterschiedliche Materialeigenschaften besitzt. Beispielsweise ist das Material im Bereich der Fräskanten härter als im übrigen Bereich der Schneide, wodurch sicher gestellt wird, dass stärker beanspruchte Bereiche (Fräskanten) stärker belastbar sind, als weniger beanspruchte Bereiche.

Außerdem wird das Festsetzen vom Material dadurch vermieden, indem der Übergang zwischen jeweils einer Fräskante und der dazugehörigen Ableitvorrichtung abgerundet ist, wodurch schwer zugängliche Kantenbereiche vermieden werden.

Eine einteilige Schneide bzw. eine einteilige Einheit, bestehend aus einer Fräskante und einer Ableitvorrichtung, können beispielsweise aus einem Guss gefertigt werden oder aus einem Sintervorgang hervorgehen. Vorzugsweise sind die Fräskanten zusätzlich nachbearbeitet. Bei der Nachbearbeitung ist es beispielsweise möglich, die Fräskanten durch Fräsen und/oder Schleifen oder durch Drahterosion bzw. Senkerosion in die gewünschte Form zu bringen bzw. die Fräskanten zu härten oder auch zu schärfen.

Was die Ableitvorrichtungen betrifft, so ist es möglich, diese mit einem Schutzbelag, wie z. B. mit titanhaltigen oder aluminiumoxidhaltigen Materialien zu beschichten, oder mit einer Nanobeschichtung zu versehen. Solche Beschichtungen können als Verschleißschutz dienen, indem lokale Erwärmungen durch eine verbesserte Wärmeleitung und/oder durch eine verminderte Reibung verhindert werden.

Weiter können die Ableitvorrichtungen eine Vertiefung, wie z. B. eine Mulde oder Rinne, aufweisen, so dass das abgefräste Punktschweißelektrodenmaterial leichter abgeleitet werden kann. Erfindungsgemäß ist die Oberfläche der Ableitvorrichtung in einer Richtung eben (keine Krümmung aufweist), so dass das abgefräste Material leicht in der ungekrümmten Richtung der Ebene entlang gleiten kann.

Bevorzugt hat die Schneide eine Form derart, dass das Ende, das nahe der Rotationsachse liegt, kleinere Abmessungen aufweist als das Ende, das ferner von der Rotationsachse angeordnet ist, so dass die Form der Schneide in etwa pyramidenstumpfartig ist. Durch solch eine Geometrie wird berücksichtigt, dass das entlang der Fräskanten entstehende abgefräste Material durch Fliehkräfte von innen (nahe der Rotationsachse) nach außen (weiter entfernt von der Rotationsachse) bewegt wird, so dass die Menge des abzuleitenden Materials von innen nach außen zunimmt. Folglich hilft eine derartige Geometrie, ein Zusetzen (vor allem im äußeren Bereich) zu vermeiden. Es ist daher wünschenswert, dass zusätzlich zur unterschiedlichen Höhe der beiden Enden der Schneide (welches schon durch die Form der Punktschweißelektrodenspitzen sinnvoll ist) auch die Breite der beiden Enden (Stirnseiten) der Schneide unterschiedlich ist, so dass in einer größeren Entfernung zur Rotationsachse die Schneide breiter ist als nahe der Rotationsachse.

Die erfindungsgemäße Schneide ist typischerweise in einem Elektrodenfräswerkzeug befestigt, die bevorzugter Weise zwei Halterungen, auch Karkassen genannt, umfasst. Die Halterungen sind im Wesentlichen zylinderförmig und weisen im Inneren Aussparungen auf, die zur Aufnahme der Schneide dienen. Bei einem Fräsvorgang rotiert eine Halterungen um ihre (Zylinder-) Symmetrieachse. Des Weiteren sind die Halterungen typischerweise so geformt, dass sie neben ihrer Haltefunktion der Schneide auch noch als Führung der zu bearbeitenden Punktschweißelektroden dienen.

Ein Kappenfräser umfasst ein Fräswerkzeug bzw. eine Schneide wie weiter oben oder weiter unten aufgeführt. Ein solcher Kappenfräser umfasst beispielsweise noch einen Motor sowie evtl. ein Getriebe zum rotierenden Antrieb des Fräswerkzeugs. Auch kann eine zugehörige Steuerung für den Motor vorgesehen sein, sowie Schaltmittel zum Einschalten bzw. Ausschalten des Motors.

Weitere Aspekte von bevorzugten und möglichen Ausführungsformen der Erfindung werden anhand der Figuren 1, 2 und 3 deutlich. Dabei zeigt:
- Figur 1: eine schematische Querschnittsansicht einer Schneide mit Halterung und zu bearbeitender Punktschweißelektrodenspitze;
- Figur 2: eine schematische Ansicht einer Schneide; und
- Figur 3: eine schematische Ansicht eines Elektrodenfräswerkzeuges mit Schneide und zwei Halterungen, sowie zwei Punktschweißelektrodenspitzen.

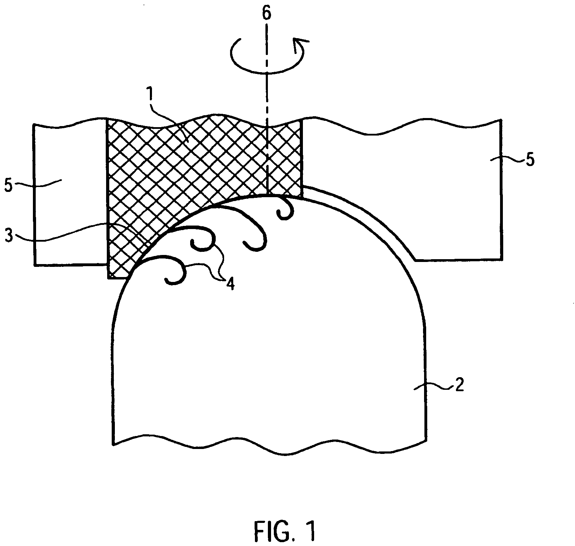

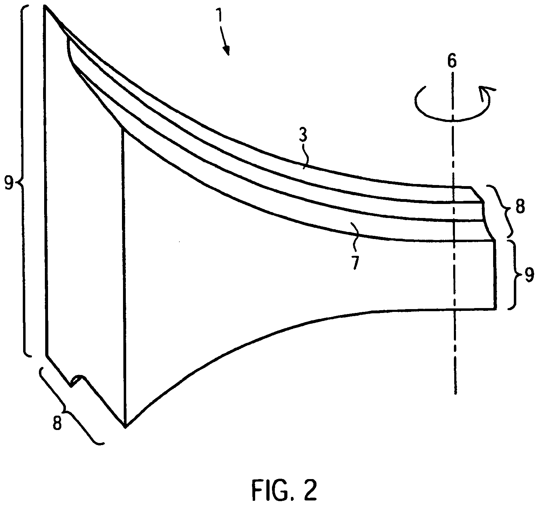

Figur 1 zeigt schematisch einen Querschnitt einer Schneide 1, welche in einer Halterung 5 angebracht ist und mitsamt der Halterung um Rotationsachse 6 in Pfeilrichtung rotiert. Die Schneide 1 bewegt sich um die Spitze einer Punktschweißelektrode 2 derart, dass die Fräskante 3 Material 4 von der Spitze der Punktschweißelektrode 2 abfräst bzw. abträgt. Das bei diesem Vorgang entstehende Punktschweißelektrodenmaterial 4 muss möglichst effektiv mit Hilfe einer oder mehrere Ableitvorrichtungen 7 (in Fig. 2 gezeigt) aus dem Bereich der Schneide bzw. der Punktschweißelektrodenspitze entfernt werden, damit das Material 4 nicht die Schneide 1 bzw. das Elektrodenfräswerkzeug zusetzt.

Figur 2 zeigt eine schematische Ansicht einer Schneide mit angedeuteter Rotationsachse 6. Die Ableitvorrichtung 7 schließt sich nahtlos an die Fräskante 3 an, da beide aus einem Teil ausgebildet sind. Eine zweite Fräskante mit Ableitvorrichtung ist im unteren Teil der Abbildung angedeutet. Die Schneide 1 weist an dem nahe der Rotationsachse 6 liegenden Teil eine kleinere Breite 8 und Höhe 9 auf als am der Rotationsachse 6 femliegenden Teil, wo jeweils die Breite 8 und die Höhe 9 größer sind. Während typischerweise die Breite der Fräskante 3 konstant ist, so nimmt die Breite der Ableitvorrichtung 7 vorzugsweise mit größerem Abstand von der Rotationsachse 6 zu, was zum verbesserten Abfluss des abgefrästen Materials 4 führt. Die gezeigte Schneide 1 ist einteilig bzw. aus einem einzigen Stück bestehend.

Weiter ist in Fig. 2 erkennbar, dass der Übergang zwischen der Fräskante 3 und der Ableitvorrichtung 7 abgerundet ist, so dass ein Ablagern von abgefrästem Material 4 nur schwer möglich ist. Die radiale Form der Fräskante 3 ist so beschaffen, dass die zu bearbeitenden Punktschweißelektroden 2 an der Spitze beim Fräsen wieder ihre ursprüngliche Form erhalten. Eine Ableitvorrichtung 7 weist eine geringere Höhe 9 (entlang der Rotationsachse) auf als die dazugehörige Fräskante 3, so dass für das abgefräste Material 4 genügend Raum für den Abtransport bleibt. Es sind Ausführungsformen möglich, in denen die Oberfläche der Ableitvorrichtung 7 entweder im Wesentlichen parallel zur Fräskante 3 verläuft, oder in denen der Abstand der Oberfläche der Ableitvorrichtung 7 zu der Fräskante 3 nahe der Rotationsachse 6 hin größer ist als bei größeren Entfernungen zur Rotationsachse 6, so dass bei kleinen Abständen von der Rotationsasche 6 mehr Raum für das Ableiten des abgefrästen Materials 4 zu Verfügung steht.

Vorteilhaft ist auch eine Ausführungsform, bei der der Abstand zwischen Fräskante 3 und Oberfläche der Ableitvorrichtung 7 ausgehend von der Rotationsachse immer zunimmt. Dadurch steht nach außen hin immer mehr Raum für entlang der Fräskante anfallende Späne zur Verfügung. Auch kann der Abstand zunächst zunehmen und dann konstant bleiben oder wieder abfallen. Dadurch kann eine relativ gleichmäßige Rundung der Oberfläche erreicht werden, was eine Spanableitung vereinfacht.

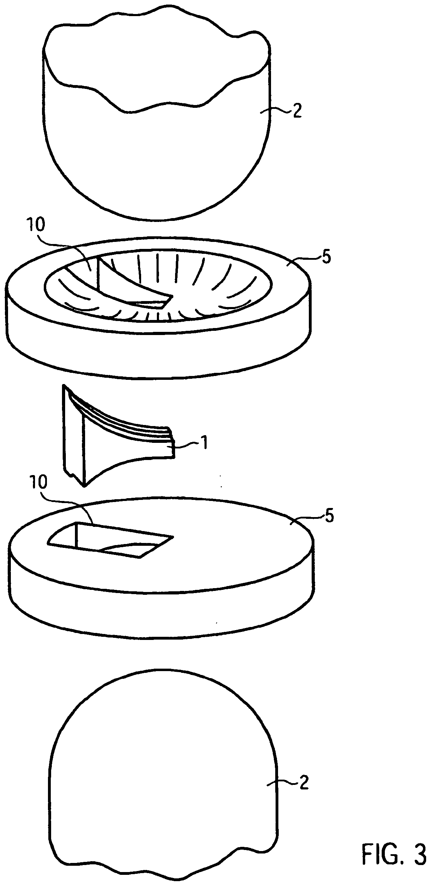

Figur 3 zeigt eine schematische Ansicht eines Elektrodenfräswerkzeuges, bestehend aus zwei Halterungen 5 mit Aussparungen 10 und einer Schneide 1, sowie zwei Punktschweißelektroden 2, von denen jeweils die Spitzen angedeutet sind. Die Schneide 1 ist zur besseren Darstellung leicht gedreht abgebildet. Die Aussparungen 10 sind so gestaltet, dass sie die Schneide 1 von unten bzw. von oben aufnehmen können. Im geschlossenen Zustand (Haltezustand) sind die Schneide 1 und die Halterungen 5 so miteinander verbunden, dass die Aussparungen 10 weitgehend vollständig von Teilen der Schneide 1 ausgefüllt sind. Dadurch entsteht eine annähernd glatte Oberfläche, aus der nur die obersten Teile der Fräskanten 3 herausstehen. Diese Oberflächen sind so geformt, dass sie die Spitzen der Punktschweißelektroden 2 aufnehmen können. Optional umfassen die Halterungen 5 zusätzliche Aussparungen, durch die abgefrästes Punktschweißelektrodenmaterial 4 besser abgeleitet werden kann.

## Patentansprüche

1. Schneide (1) zum Bearbeiten von Punktichweißelektroden (2) mit einer oder mehreren Fräskanten (3) zum Bearbeiten der Punktschweißelektroden (2); und
einer oder mehreren Ableitvorrichtungen (7) zum Ableiten von beim Fräsvorgang entstehendem abgetragenem Punktschweißelektrodenmaterial (4) aus dem Bereich der Schneide (1) heraus
wobei
jeweils eine Fräskante (3) und eine dazugehörige Ableitvorrichtung (7) einteilig ausgebildet sind, **dadurch gekennzeichnet, dass**
der Übergang zwischen jeweils einer Fräskante (3) und einer Ableitvorrichtung (7) abgerundet ist, und dass
die Ableitvorrichtung (7) eine Oberfläche zum Ableiten des Punktschweißelektrodenmaterials (4) aufweist, die in radialer Richtung gekrümmt ist und zumindest in einem Bereich in einer anderen Richtung nicht gekrümmt ist.

2. Schneide (1) nach Anspruch 1, wobei die gesamte Schneide (1) einteilig ausgebildet ist.

3. Schneide (1) nach einem der Ansprüche 1 oder 2, wobei das Material, aus dem die Fräskanten (3) und die Ableitvorrichtungen (7) bestehen, homogene Materialeigenschaften besitzt.

4. Schneide (1) nach einem der Ansprüche 1 oder 2, wobei das Material, aus dem die Fräskanten (3) und die Ableitvorrichtungen (7) bestehen, an den Fräskanten (3) härter ist als im übrigen Bereich.

5. Schneide (1) nach einem der vorhergehenden Ansprüche, wobei eine Einheit, bestehend aus jeweils einer Fräskante (3) und einer Ableitvorrichtung (7), aus einem Guss gefertigt ist oder aus einem Sintervorgang hervorgeht.

6. Schneide (1) nach Anspruch 5, wobei die Fräskanten (3) zusätzlich nachgearbeitet, wie zum Beispiel gefräst oder gehärtet, sind.

7. Schneide (1) nach einem der vorhergehenden Ansprüche, wobei zumindest die Ableitvorrichtungen (7), zum Beispiel mit einem Verschleißschutz, beschichtet sind.

8. Schneide (1) nach einem der vorhergehenden Ansprüche, wobei mindestens eine der Ableitvorrichtungen (7) in Form einer Mulde und/oder Vertiefung und/oder Rinne realisiert ist.

9. Schneide (1) nach einem der vorhergehenden Ansprüche, wobei das der Rotationsachse (6) naheliegende Ende der Schneide (1) kleinere Abmessungen aufweist als das der Rotationsachse (6) fernliegende Ende der Schneide (1).

10. Schneide (1) nach Anspruch 9, wobei bei genannten Abmessungen die Breite (8) in Richtung senkrecht zur Rotationsachse (6) unterschiedlich ist, und/oder wobei bei genannten Abmessungen die Höhe (9) in Richtung der Rotationsachse (6) unterschiedlich ist.

11. Elektrodenfräswerkzeug mit einer Schneide (1) nach einem der vorhergehenden Ansprüche mit einer oder mehreren, bevorzugt zwei, Halterungen (5).

12. Elektrodenfräswerkzeug nach Anspruch 11, wobei die Halterungen (5) im Wesentlichen kreiszylinderförmig oder zylinderförmig mit einem anderen Querschnitt sind, wie beispielsweise viereckig, fünfeckig oder sechseckig, und im inneren Bereich Aussparungen (10) zur Aufnahme der Schneide (1) umfassen.

13. Elektrodenfräswerkzeug nach Anspruch 12, wobei die Aussparungen (10) der Halterungen (5) gleichzeitig zur Aufnahme und/oder Führung der zu bearbeitenden Punktschweißelektroden (2) dienen.

14. Kappenfräser mit einer Schneide (1) nach einem der Ansprüche 1 bis 10 oder einem Elektrodenfräswerkzeug nach einem der Ansprüche 11 bis 13.

## Claims

1. Blade (1) for machining spot welding electrodes (2), having one or more milling edge(s) (3) for machining the spot welding electrodes (2); and
one or more diverting device(s) (7) for diverting removed spot welding electrode material (4) produced during the milling process from the region of the blade (1),
wherein
one milling edge (3) and an associated diverting device (7) respectively are designed in one piece, **characterised in that**
the transition between one milling edge (3) and a diverting device (7) respectively is rounded, and **in that**
the diverting device (7) has a surface for diverting the spot welding electrode material (4) which is curved in the radial direction and is not curved in a different direction at least in one region.

2. Blade (1) according to claim 1, wherein the whole blade (1) is designed in one piece.

3. Blade (1) according to claim 1 or 2, wherein the material from which the milling edges (3) and the diverting devices (7) are made has homogenous material properties.

4. Blade (1) according to claim 1 or 2, wherein the material from which the milling edges (3) and the diverting devices (7) are made is harder on the milling edges (3) than in the remaining region.

5. Blade (1) according to any one of the preceding claims, wherein a unit, comprising a milling edge (3) and a diverting device (7) respectively, is manufactured from a casting or emanates from a sintering process.

6. Blade (1) according to claim 5, wherein the milling edges (3) are additionally reworked, for example are milled or hardened.

7. Blade (1) according to any one of the preceding claims, wherein at least the diverting devices (7) are coated, for example with wear protection.

8. Blade (1) as claimed in any one of the preceding claims, wherein at least one of the diverting devices (7) is implemented in the form of a depression and/or indentation and/or channel.

9. Blade (1) as claimed in any one of the preceding claims, wherein the end of the blade (1) located close to the axis of rotation (6) has smaller dimensions than the end of the blade (1) remote from the axis of rotation (6).

10. Blade (1) according to claim 9, wherein in the case of said dimensions, the width (8) is different in the direction perpendicular to the axis of rotation (6) and/or wherein in the case of said dimensions, the height (9) is different in the direction of the axis of rotation (6).

11. Electrode milling tool having a blade (1) according to any one of the preceding claims comprising one or more, preferably two, holders (5).

12. Electrode milling tool according to claim 11, wherein the holders (5) are substantially circular cylindrical or cylindrical with a different cross-section, such as rectangular, pentagonal or hexagonal, and comprise recesses (10) in the inner region for receiving the blade (1).

13. Electrode milling tool according to claim 12, wherein the recesses (10) in the holders are simultaneously used to receive and/or guide the spot welding electrodes (2) to be machined.

14. Tip dresser having a blade (1) according to any one of claims 1 to 10 or an electrode milling tool according to any one of claims 11 to 13.

## Revendications

1. Lame (1) pour usiner des électrodes de soudage par points (2), avec
une ou plusieurs arêtes de fraisage (3) pour usiner les électrodes de soudage par points (2) ; et
un ou plusieurs dispositifs d'évacuation (7) pour évacuer de la zone de la lame (1) la matière d'électrode de soudage par points (4) enlevée lors de l'opération de fraisage,
étant précisé que chaque arête de fraisage (3) et le dispositif d'évacuation (7) associé sont formés d'une seule pièce,
**caractérisée en ce que** la transition entre chaque arête de fraisage (3) et chaque dispositif d'évacuation (7) est arrondie, et
**en ce que** le dispositif d'évacuation (7) présente une surface pour évacuer la matière d'électrode de soudage par points (4) qui est courbe dans le sens radial et, au moins dans une zone, non courbe dans un autre sens.

2. Lame (1) selon la revendication 1, étant précisé que toute la lame (1) est formée d'une seule pièce.

3. Lame (1) selon l'une des revendications 1 ou 2, étant précisé que la matière dont se composent les arêtes de fraisage (3) et les dispositifs d'évacuation (7) a des propriétés de matière homogène.

4. Lame (1) selon l'une des revendications 1 ou 2, étant précisé que la matière dont se composent les arêtes de fraisage (3) et les dispositifs d'évacuation (7) est plus dure au niveau des arêtes (3) que dans le reste de la lame.

5. Lame (1) selon l'une des revendications précédentes, étant précisé qu'une unité composée d'une arête de fraisage (3) et d'un dispositif d'évacuation (7) est fabriquée à partir d'une pièce coulée ou provient d'une opération de frittage.

6. Lame (1) selon la revendication 5, étant précisé que les arêtes de fraisage (3) sont soumises à une retouche supplémentaire, par exemple par fraisage ou trempe.

7. Lame (1) selon l'une des revendications précédentes, étant précisé que les dispositifs d'évacuation (7), au moins, sont revêtus, par exemple d'une couche d'usure.

8. Lame (1) selon l'une des revendications précédentes, étant précisé que l'un au moins des dispositifs d'évacuation (7) est réalisé sous la forme d'une cavité et/ou d'un creux et/ou d'une rainure.

9. Lame (1) selon l'une des revendications précédentes, étant précisé que l'extrémité de la lame (1) proche de l'axe de rotation (6) présente des dimensions plus petites que l'extrémité de la lame (1) éloignée de l'axe de rotation (6).

10. Lame (1) selon la revendication 9, étant précisé qu'avec les dimensions indiquées, la largeur (8) varie perpendiculairement à l'axe de rotation (6), et/ou qu'avec les dimensions indiquées, la hauteur (9) varie dans le sens de l'axe de rotation (6).

11. Outil de fraisage d'électrodes avec une lame (1) selon l'une des revendications précédentes, avec une ou plusieurs, de préférence deux fixations (5).

12. Outil de fraisage d'électrodes selon la revendication 11, étant précisé que les fixations (5) ont globalement une forme cylindrique ronde ou une forme cylindrique avec une autre section transversale, par exemple rectangulaire, pentagonale ou hexagonale, et comprennent dans la zone intérieure des évidements (10) pour recevoir la lame (1).

13. Outil de fraisage d'électrodes selon la revendication 12, étant précisé que les évidements (10) des fixations (5) servent en même temps à recevoir et/ou à guider les électrodes de soudage par points (2) à usiner.

14. Fraise pour bout d'électrode avec une lame (1) selon l'une des revendications 1 à 10 ou avec un outil de fraisage d'électrodes selon l'une des revendications 11 à 13.
